# EUROPEAN PATENT SPECIFICATION

(11) **EP 0 718 838 B1**
(45) Date of publication and mention of the grant of the patent: **01.03.2000**
(21) Application number: 96103322.2
(22) Date of filing: 28.10.1992
(51) Int. Cl.: G11B 19/10, G11B 19/12, G11B 7/00, G11B 7/007, G11B 20/00, G06F 1/00

(54) **Security check method for a game device**
Verfahren zur Sicherheitskontrolle eines Spielgeräts
Procédé de contrôle de sécurité d'un dispositif de jeu

(30) Priority: 31.01.1992 JP 1700692
(43) Date of publication of application: 26.06.1996
(62) Divisional of application: 92309870.1
(73) Proprietor: SEGA ENTERPRISES, LTD., Tokyo 144 (JP)
(72) Inventor: Asai, Toshinori, Ohta-ku, Tokyo 144 (JP); Kawohori, Masaki, Ohta-ku, Tokyo 144 (JP)
(74) Representative: SERJEANTS

(56) References cited:
- EP-A- 0 080 244
- EP-A- 0 378 385
- EP-A- 0 447 043
- US-A- 4 462 076

## Description

### BACKGROUND OF THE INVENTION

The invention relates to security check methods for information storage media for storing application software such as game programs.

The CD (compact disk) was originally developed as a sound recording medium, but more recently has attracted attention as a large capacity storage medium for information other than sound. Since the information on a CD is digitally recorded, it is suited for computer processing. Many types of information can be stored, including programs, data and images. CDs containing information other than sound recordings or additional to sound recordings are known as CD-ROMs (compact disk read-only memories).

Game software for video game machines is now supplied on CD-ROMs as an alternative to conventional cartridges. In addition to the game program, the CD-ROM can contain a large quantity of information readable as video images, sound, etc. This can be decoded in accordance with the progress of the game, enabling the provision of video games which are more illustrative and have better picture and sound quality.

It is necessary for any given game machine to be able to recognise cartridges or CD-ROMs storing game software inserted in it as being of an appropriate format and as being produced by the authentic game machine maker or duly licensed and proper for use in that machine. Once so recognised, an indication of the authorized production or the licence may be displayed on the television connected to the game machine as a preliminary to the game. Such licences may be granted by video game machine makers for software producers to make game software exclusively for use on their game machines.

In order to reject unlicensed or unauthorized game software there have been proposed various kinds of security systems for such game machines. One of the prior art security systems was proposed in US-A-4462076. This prior art proposes to use the copyright notice and the name of the copyright proprietor as the security message. Another security system for a game machine is disclosed in EP-A-0447043. The game controller reads a security code from a game cartridge or an optical disk and outputs it to a security device, which compares the read security code with a reference security code stored in the game machine. If the security codes do not match, the security device outputs a reset signal to halt operation of the CPU of the game machine. The security check is performed when the game machine is powered up and may be repeated as the game progresses.

One way in which prior art security check methods have been circumvented to allow the use of unauthorized game software on CD-ROM game devices is as follows. An authentic and authorized disk is first mounted in the device and passes the security check carried out by the device. The authentic disk is then removed from the device and is replaced by an unauthorized disk containing application software such as game programs that can be executed on the game device.

The present invention proposes a novel and further improved security system which increases the difficulty of breaking the security system.

### SUMMARY OF THE INVENTION

The invention provides a game device comprising:
a disk reader to which an optical disk with a game program stored thereon may be mounted;
comparing means for comparing data read from a predetermined sector of the optical disk with a reference security code stored in the game device to determine whether or not the read data agree with the reference security code;
enabling means for enabling the game device to execute a game operation in accordance with the game program read from the optical disk when the comparing means determines that the read data agree with the reference security code;
checking means for checking whether the disk reader is open when the game device is enabled for executing the game operation by the enabling means; and
means for disabling the game device from executing the game operation and for resuming operation of the comparing means when the checking means determines that the disk reader is open.

The invention further provides a security check method for a game device comprising the steps of:
mounting an optical disk with a game program stored thereon to a disk reader of the game device;
reading data from a predetermined sector of the optical disk;
comparing the read data with a reference security code stored in the game device to determine whether or not the read data agree with the reference security code;
enabling the game device to execute a game operation in accordance with the game program stored on the optical disk when the comparing means has determined that the read data agree with the reference security code;
checking whether the disk reader is open when the game device is enabled for executing the game operation by the enabling means; and
disabling the game device from executing the game operation and returning to the step of comparing the read data with a reference security code when the checking means has determined that the disk reader is open.

### BRIEF DESCRIPTION OF THE DRAWINGS

Figure 1 is a plan view of a CD-ROM according to the invention, diagrammatically showing part of the information recorded on it;
Figure 2 is a first part of a flow chart illustrating a CD-ROM security check method according to the invention; and
Figure 3 is a continuation and conclusion of the flow chart of Figure 2.

### DETAILED DESCRIPTION OF THE INVENTION

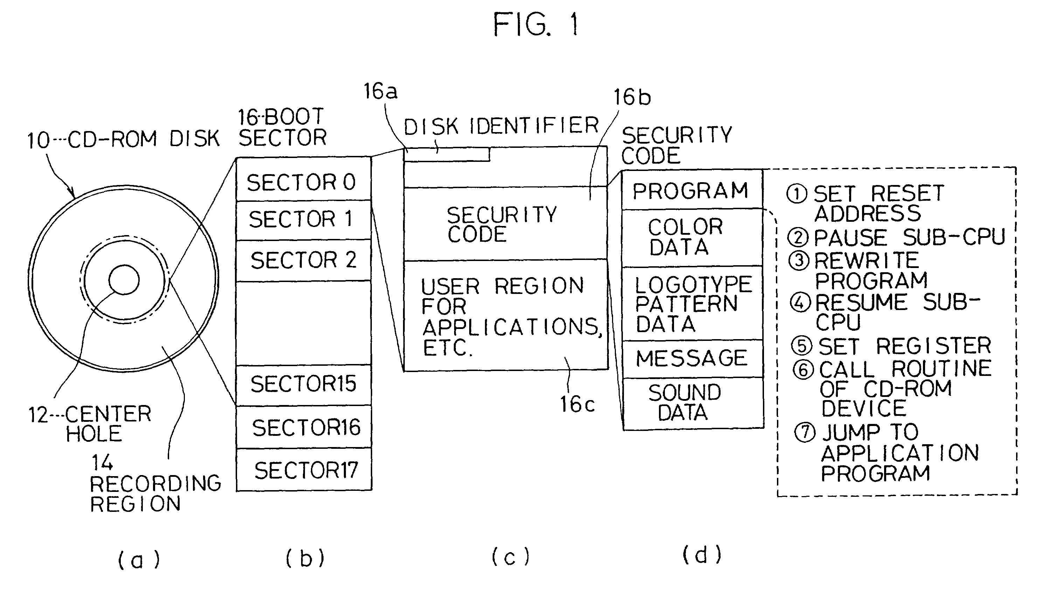

Referring to Figure 1(a), a CD-ROM 10 according to one embodiment of the invention has a diameter of 120 mm. A 15 mm diameter centre hole 12 is formed in the centre of the CD-ROM 10. A boot sector 16 to be first read when actuated is provided on the innermost track of a recording region 14 in which ROM data and audio data are recorded.

As shown in Figure 1 (b), the boot sector has an area from Logic Sector Numbers 0 to 15. A disk identifier and a security code are recorded in the boot sector, i.e., in plural ones of the sectors of the boot sector in view of possible recording or read errors. Usually they are recorded in the first sector of the boot sector having Logic Sector No. 0.

The disk identifier indicates a kind of the CD-ROM 10, and as shown in Figure 1(c) is usually recorded in an identifier region 16a at the foremost part of the boot sector 16. In this embodiment, two kinds of identifiers, "SEGADISCSYSTEM□□" and "SEGABOOTDISC□□□□" (□ represents a space), are used. The former identifier "SEGADISCSYSTEM□□" is a disk identifier to be used in a CD-ROM carrying game software which ends on the disk. The latter identifier "SEGABOOTDISC□□□□" is a disk identifier to be used in a CD-ROM carrying game software which is continued on a plurality of CD-ROMs, and is to be recorded in the first of the CD-ROMs carrying the game software.

The security code indicates that the CD-ROM 10 is produced by or duly licensed by an authentic game machine maker. As shown in Figure 1(c), the security code is recorded in a security region 16b at a preset address in the boot sector 16.

As shown in Figure 1(d), the security code contains a program to be executed after a checking operation of the security code, colour data indicative of colours of LOGOTYPE to be displayed, LOGOTYPE pattern data indicative of patterns of LOGOTYPE to be displayed, message data indicative of a message "PRODUCED BY OR UNDER LICENCE FROM XXXX", and sound data indicative of a licensor television game machine maker. (Note, at the portion "XXXX" the name of the authentic game machine maker is inserted, for example "SEGA ENTERPRISES LTD.")

This embodiment is especially characterized in that a program itself to be executed following checking of the security code is contained in the security code. In other words, the program for displaying the LOGOTYPE and message data indicative of a producer and/or a licensor of the game software is used as a security code. The program involved in this embodiment is executed by the main CPU of a television game machine. As shown in Figure 1(d), the program includes seven steps.

In the first step, an address to which the main CPU jumps when the television game machine is reset is set.

In the second step, a sub-CPU provided in a CD-ROM reader which forms part of the television game machine is temporarily paused.

In the third step, the contents of the program memory of the sub-CPU are rewritten from data recorded on the CD-ROM.

In the fourth step, the operation of the temporarily paused sub-CPU is resumed.

In some television game machines, these second through fourth steps may be omitted.

In the fifth step, the head addresses of data recorded on the CD-ROM are set in a register of the main CPU.

In the sixth step, a required program routine stored in the CD-ROM device is executed. This program routine performs a resetting operation, such as licence display.

The program routine involved in this embodiment performs the following resetting operation.

First a vertical interrupt address is set. Next, a sound processor and a video processor are reset, while a video RAM is cleared, and ASCII character graphics are set. Then, based on colour data stored in the security code 16b, display colours are set, and based on LOGOTYPE data in the security code 16b, LOGOTYPE character graphics are set. Subsequently message data (PRODUCED BY OR UNDER LICENCE FROM XXXX) in the security code 16b are displayed on a television screen, and a LOGOTYPE map is set to display LOGOTYPE on the television screen. Then, after one second, based on sound data stored in the security code 16b, sounds indicative of a licensor television game machine maker are outputted, and a LOGOTYPE mark colour is changed, and then the television screen display is cleared.

Finally in the seventh step, a jump is performed to an application program, such as a game program.

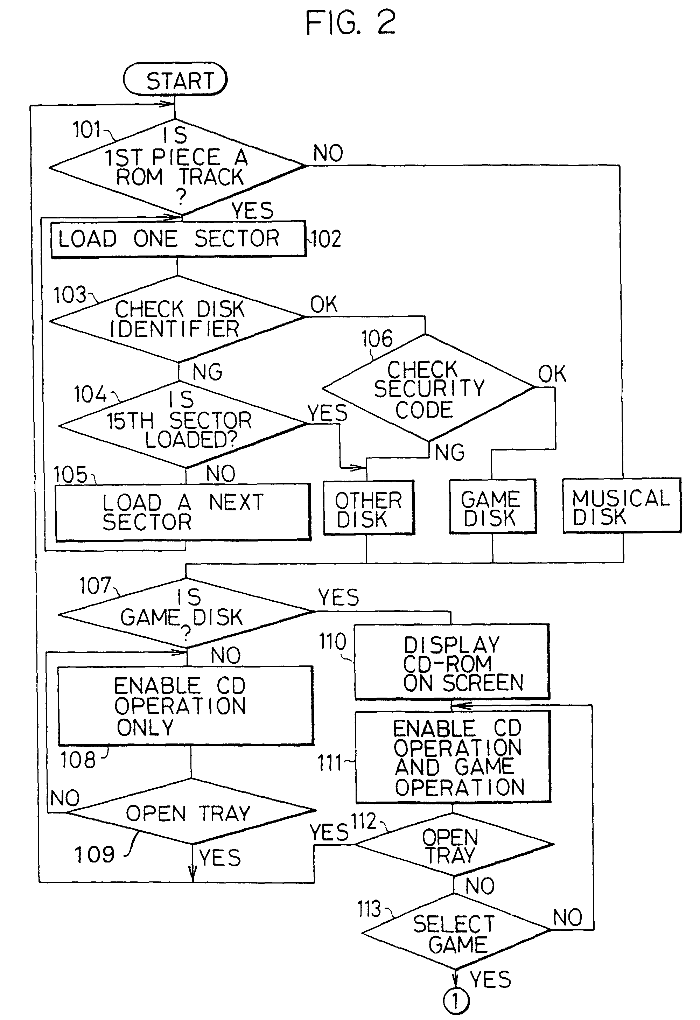

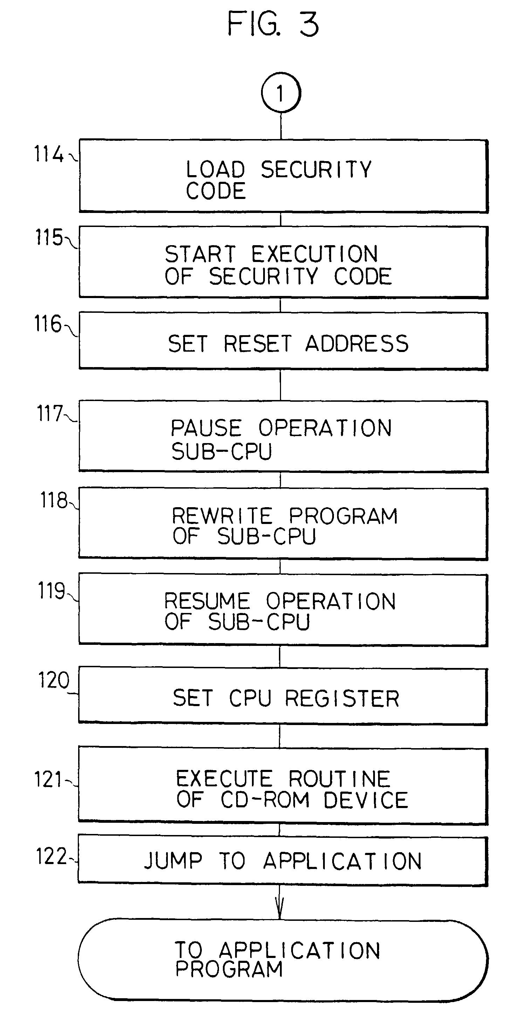

A CD-ROM security check method according to one embodiment of the invention is next described with reference to Figures 2 and 3 of the drawings.

In the flow charts of Figures 2 and 3, Steps 101 to 106 are for checking the security code by the sub-CPU of the CD-ROM reader provided in the television game machine. Step 107 and subsequent steps are for operations by the main CPU provided in the television game machine.

First it is determined whether or not one piece read from the CD-ROM 10 is a ROM track (Step 101). If it is not a ROM track, the disk is determined to be a conventional music CD.

If it is determined to be a ROM track, the first sector of the boot sector 16 is loaded (Step 102). Next, the disk identifier recorded in the identifier region 16a of the boot sector 16 is compared with a disk identifier stored in the memory of the CD-ROM reader (Step 103).

If the recorded and stored identifiers do not agree, it is determined whether or not all the sectors of the boot sector 16 have been loaded (Step 104). If all the sectors of the boot sector 16 have not been loaded, a next load sector is set (Step 105), and the processing is returned to Step 102. If all the sectors of the boot sector 16, and there is still no agreement between the recorded identifier and the stored identifier, the disk is determined to be a CD-ROM but not a game disk.

When the recorded identifier agrees with the stored identifier in Step 103, then a security code recorded in the security region 16a in the boot sector 16 is compared with the security code stored in the memory of the CD-ROM device (Step 106). If the recorded security code agrees with the stored security code, the CD-ROM is determined a duly authorized or licensed proper game disk. If the recorded security code does not agree with the stored security code, the disk is determined a different disk.

The processing heretofore is the operation of the sub-CPU provided in the CD-ROM reader. This processing is followed by the operation by the main CPU provided in the television game machine.

First, it is determined whether or not the loaded CD-ROM 10 is a game disk (Step 107). If the disk is not a game disk, the operation for the usual music CD is enabled (Step 108). Incessantly it is determined whether or not the tray of the CD-ROM reader is opened (Step 109). If it is determined that the tray has been opened, there will be a possibility that the loaded CD-ROM 10 has been replaced, and the processing is returned to Step 101.

In Step 107, when the loaded CD-ROM 10 is determined to be a game disk, "CD-ROM" is displayed on the television screen (Step 110), and both the operation of the usual musical CD and the game operation are enabled (Step 111). Incessantly it is determined whether or not the tray of the CD-ROM reader is opened (Step 112). If it is determined that the tray has been opened, there will be a possibility that the CD-ROM 10 has been replaced, and the processing is returned to Step 101.

Subsequently it is determined which has been selected between the usual musical CD operation and the game operation (Step 113). If the game operation is selected, Step 114, which will be explained below, will follow.

First, the security code is loaded from the CD-ROM 10 (Step 114). Then a program contained in the security code starts to be executed (Step 115).

The first step of the program is executed, and an address to which the main CPU should jump when the television game machine is reset is set (Step 116).

Then, the second step of the program is executed, and the operation of the sub-CPU provided in the CD-ROM reader is temporarily paused (Step 117).

Next, the third step of the program is executed, and contents of the program memory of the sub-CPU is rewritten from data recorded on the CD-ROM 10 (Step 118).

Then the fourth step of the program is executed, and the operation of the temporarily paused sub-CPU is resumed (Step 119).

In some television game machines, these steps 117 to 119 can be skipped.

Then the fifth step of the program is executed, and the head addresses of data recorded in the CD-ROM are set in a register provided in the main CPU (Step 120).

Next, the sixth step of the program is executed, and a required program routine stored in the CD-ROM device is executed (Step 121). In this program routine, resetting operation including the above-described licence display, etc. is performed.

Returning from the program routine stored in the CD-ROM device, the seventh step of the program is executed to jump to an application program (Step 122), and the execution of the application program of a game or others is started, and the security check operation of the CD-ROM is finished.

The invention is not limited to the particular embodiment described above. Other embodiments within the scope of the appended claims are included. For example, the program contained in the security code is not limited to the program above described but may be any kind of program.

## Claims

1. A game device comprising:
a disk reader to which an optical disk with a game program stored thereon may be mounted;
comparing means for comparing data read from a predetermined sector of the optical disk with a reference security code stored in the game device to determine whether or not the read data agree with the reference security code; and
enabling means for enabling the game device to execute a game operation in accordance with the game program read from the optical disk when the comparing means determines that the read data agree with the reference security code; characterized by
checking means for checking whether the disk reader is open when the game device is enabled for executing the game operation by the enabling means; and
means for disabling the game device from executing the game operation and for resuming operation of the comparing means when the checking means determines that the disk reader is open.

2. The game device of claim 1, wherein the read data contains a program to be executed after the comparison of the read data with said reference security code.

3. The game device of claim 1, wherein the read data contains a program for displaying a message indicating a producer and/or a licensor of the game program.

4. A security check method for a game device comprising the steps of:
mounting an optical disk with a game program stored thereon to a disk reader of the game device;
reading data from a predetermined sector of the optical disk;
comparing the read data with a reference security code stored in the game device to determine whether or not the read data agree with the reference security code; and
enabling the game device to execute a game operation in accordance with the game program stored on the optical disk when the comparing means has determined that the read data agree with the reference security code; characterized by
checking whether the disk reader is open when the game device is enabled for executing the game operation by the enabling means; and
disabling the game device from executing the game operation and returning to the step of comparing the read data with a reference security code when the checking means has determined that the disk reader is open.

## Patentansprüche

1. Spielvorrichtung, mit folgenden Merkmalen:
- Einem Plattenleser, an dem eine optische Platte angebracht werden kann, auf der ein Spielprogramm gespeichert ist;
- eine Vergleichseinrichtung zum Vergleichen von Daten, die von einem vorgegebenen Sektor der optischen Platte gelesen werden, mit einem Referenz-Sicherheitscode, der in der Spielvorrichtung gespeichert ist, um zu ermitteln, ob die gelesenen Daten mit dem Referenz-Sicherheitscode übereinstimmen oder nicht; und
- eine Freigabeeinrichtung zum Freigeben der Spielvorrichtung, um einen Spielbetrieb in Übereinstimmung mit dem Spielprogramm auszuführen, das von der optischen Platte gelesen wird, wenn die Vergleichseinrichtung ermittelt, daß die gelesenen Daten mit dem Referenz-Sicherheitscode übereinstimmen;
gekennzeichnet durch
- eine Überprüfungseinrichtung zum Überprüfen, ob der Plattenleser offen ist, wenn die Spielvorrichtung durch die Freigabeeinrichtung zum Ausführen des Spielbetriebs freigegeben ist; und
- eine Einrichtung zum Deaktivieren der Spielvorrichtung von einem Ausführen des Spielbetriebs und zum Wiederaufnehmen des Betriebs der Vergleichseinrichtung, wenn die Überprüfungseinrichtung ermittelt; daß der Plattenleser offen ist.

2. Spielvorrichtung nach Anspruch 1, wobei die gelesenen Daten ein Programm enthalten, das nach dem Vergleich der gelesenen Daten mit dem Referenz-Sicherheitscode ausgeführt werden soll.

3. Spielvorrichtung nach Anspruch 1, wobei die gelesenen Daten ein Programm zum Darstellen einer Mitteilung enthalten, die einen Hersteller und/oder einen Lizenzgeber des Spielprogramms angibt.

4. Sicherheitsüberprüfungsverfahren für eine Spielvorrichtung, das folgende Schritte umfaßt:
- Anbringen einer optischen Platte, auf der ein Spielprogramm gespeichert ist, an einem Plattenleser der Spielvorrichtung;
- Lesen von Daten von einem vorgegebenen Sektor der optischen Platte;
- Vergleichen der gelesenen Daten mit einem Referenz-Sicherheitscode, der in der Spielvorrichtung gespeichert ist, um zu ermitteln, ob die gelesenen Daten mit dem Referenz-Sicherheitscode übereinstimmen oder nicht; und
- Freigeben der Spielvorrichtung zum Ausführen eines Spielbetriebs in Übereinstimmung mit dem Spielprogramm, das auf der optischen Platte gespeichert ist, wenn die Vergleichseinrichtung ermittelt hat, daß die gelesenen Daten mit dem Referenz-Sicherheitscode übereinstimmen:
gekennzeichnet durch
- Überprüfen, ob der Plattenleser offen ist, wenn die Spielvorrichtung durch die Freigabeeinrichtung zum Ausführen des Spielbetriebs freigegeben ist; und
- Deakfivieren der Spielvorrichtung von einem Ausführen des Spielbetriebs und Zurückkehren zu dem Schritt des Vergleichens der gelesenen Daten mit einem Referenz-Sicherheitscode, wenn die Überprüfungseinrichtung ermittelt hat, daß der Plattenleser offen ist.

## Revendications

1. Dispositif de jeu, comportant :
un lecteur de disque, sur lequel peut être monté un disque optique ayant un programme de jeu mémorisé,
des moyens de comparaison pour comparer des données lues depuis un secteur prédéterminé du disque optique à un code de sécurité de référence mémorisé dans le dispositif de jeu afin de déterminer si les données lues correspondent ou non au code de sécurité de référence, et
des moyens d'autorisation pour autoriser le dispositif de jeu à exécuter une opération de jeu conformément au programme de jeu lu depuis le disque optique lorsque les moyens de comparaison déterminent que les données lues correspondent au code de sécurité de référence, caractérisé par
des moyens de contrôle pour contrôler si le lecteur de disque est ouvert lorsque le dispositif de jeu est autorisé à exécuter l'opération de jeu par les moyens d'autorisation, et
des moyens pour interdire au dispositif de jeu d'exécuter l'opération de jeu et pour reprendre la mise en oeuvre des moyens de comparaison lorsque les moyens de contrôle déterminent que le lecteur de disque est ouvert.

2. Dispositif de jeu selon la revendication 1, dans lequel les données lues contiennent un programme à exécuter après la comparaison des données lues et dudit code de sécurité de référence.

3. Dispositif de jeu selon la revendication 1, dans lequel les données lues contiennent un programme pour afficher un message indiquant un fabricant et/ou un détenteur de licence du programme de jeu.

4. Procédé de contrôle de sécurité pour un dispositif de jeu comportant les étapes consistant à :
monter un disque optique ayant un programme de jeu mémorisé sur un lecteur de disque du dispositif de jeu,
lire des données depuis un secteur prédéterminé du disque optique,
comparer les données lues à un code de sécurité de référence mémorisé dans le dispositif de jeu pour déterminer si les données lues correspondent ou non au code de sécurité de référence, et
autoriser le dispositif de jeu à exécuter une opération de jeu conformément au programme de jeu mémorisé sur le disque optique lorsque les moyens de comparaison ont déterminé que les données lues correspondent au code de sécurité de référence, caractérisé par les étapes consistant à
contrôler si le lecteur de disque est ouvert lorsque le dispositif de jeu est autorisé à exécuter l'opération de jeu par les moyens d'autorisation, et
interdire au dispositif de jeu d'exécuter l'opération de jeu et revenir à l'étape de comparaison des données de lecture et du code de sécurité de référence lorsque les moyens de contrôle ont déterminé que le lecteur de disque est ouvert.
